Europäisches Patentamt

European Patent Office

Office européen des brevets

(19)

(11) Numéro de publication: **0 291 414**
**A1**

## (12) DEMANDE DE BREVET EUROPEEN

(21) Numéro de dépôt: **88401164.4**

(22) Date de dépôt: **11.05.88**

(51) Int. Cl.⁴: **B 60 R 16/02**

(30) Priorité: **13.05.87 FR 8706736**

(43) Date de publication de la demande:
**17.11.88 Bulletin 88/46**

(84) Etats contractants désignés: **DE ES GB IT SE**

(71) Demandeur: **JAEGER**
**2, rue Baudin**
**F-92303 Levallois-Perret (FR)**

(72) Inventeur: **Lazareff, André**
**15, rue des Bateliers**
**F-92110 Clichy (FR)**

(74) Mandataire: **Martin, Jean-Jacques et al**
**Cabinet REGIMBEAU 26, Avenue Kléber**
**F-75116 Paris (FR)**

(54) **Dispositif d'affichage en particulier pour boîte de vitesses automatique.**

(57) La présente invention concerne un dispositif d'affichage comprenant un organe de commande, un chariot (50) déplacé selon un trajet prédéterminé par l'organe de commande, et une pluralité de volets (100) répartis selon un pas constant le long du trajet du chariot (50), chaque volet (100) étant équipé d'une came (150) apte à venir en prise avec le chariot (50) pour déplacer le volet (100) associé d'une position de repos vers une position de travail. Selon l'invention les cames sont positionnées de façon variable et contrôlée sur les volets (100) pour définir une loi prédéterminée entre le déplacement du chariot (50) et les instants successifs de déplacement des volets (100).

FIG.1

Bundesdruckerei Berlin

Description

## DISPOSITIF D'AFFICHAGE EN PARTICULIER POUR BOITE DE VITESSES AUTOMATIQUE.

La présente invention concerne le domaine des dispositifs d'affichage.

La présente invention concerne en particulier, mais non exclusivement, un dispositif d'affichage destiné à indiquer au conducteur d'un véhicule automobile la position d'une boîte de vitesses automatique.

On a déjà proposé différents dispositifs d'affichage pour boîte de vitesses automatique.

On a par exemple proposé des dispositifs d'affichage mécaniques comportant un index ou drapeau déplacé par un câble relié à un organe actif de la boîte de vitesses. Ces dispositifs d'affichage mécaniques ne donnent cependant pas entière satisfaction du fait que l'organe actif relié au câble de commande est déplacé dans la boîte de vitesses, selon des pas non réguliers et que de ce fait l'index ou drapeau est déplacé sur le tableau de bord selon des pas homologues non réguliers.

On a également proposé des dispositifs d'affichage électriques comprenant une pluralité de cellules lumineuses commandées par des interrupteurs respectivement associés eux-mêmes contrôlés par l'organe actif de la boîte de vitesses. Cette disposition permet d'obtenir un affichage à l'aide de cellules présentant un pas régulier. Elle présente cependant les inconvénients d'être peu économique et fort encombrante .

La présente invention a pour but d'éliminer les inconvénients des dispositifs d'affichage précités.

Elle a également pour but de proposer un dispositif d'affichage qui permette de définir, par pas réguliers, la position d'une boîte de vitesses automatique, bien que controlé par un organe de commande lui-même déplacé selon des pas irréguliers.

Ces buts sont atteints, dans le cadre de la présente invention, grâce à un dispositif d'affichage qui comprend un organe de commande, un chariot déplacé selon un trajet prédéterminé par l'organe de commande, et une pluralité de volets répartis selon un pas constant le long du trajet du chariot, chaque volet étant équipé d'une came apte à venir en prise avec le chariot pour déplacer le volet associé d'une position de repos vers une position de travail, les cames étant positionnées de façon variable et contrôlée sur les volets pour définir une loi prédéterminée entre le déplacement du chariot et les instants successifs de déplacement des volets.

D'autres caractéristiques, buts et avantages de la présente invention apparaîtront à la lecture de la description détaillée qui va suivre, et en regard des dessins annexés donnés à titre d'exemple non limitatif et sur lesquels :

- la figure 1 représente une vue schématique en coupe axiale d'un dispositif d'affichage conforme à la présente invention, en position de repos du volet illustré,

- la figure 2 représente une vue similaire en position de travail du volet illustré,

- la figure 3 représente une vue schématique en coupe longitudinale du chariot, selon un plan de coupe référencé III-III sur la figure 4, et illustre en particulier la coopération définie entre le chariot et une came portée par un volet,

- la figure 4 représente une vue de dessus du chariot telle qu'illustrée par la flèche référencée IV sur la figure 3,

- la figure 5 représente une vue de dessus d'une pluralité de volets, telle qu'illustrée schématiquement par la flèche référencée V sur la figure 1, et

- la figure 6 représente une vue schématique d'ensemble d'un dispositif d'affichage conforme à la présente invention.

On aperçoit sur les figures annexées un dispositif d'affichage qui comprend pour l'esssentiel un organe de commande 10 formé d'un câble, un chariot 50 déplacé par le câble de commande 10 et une pluralité de volets 100.

Le chariot 50 est déplacé à translation par le câble de commande 10 dans une direction illustrée par la flèche référencée A.

Le chariot 50 comprend deux flasques latéraux 52, 54 s'étendant parallèlement à la direction A. Les flasques latéraux 52, 54 sont reliés entre eux par une entretoise inférieure 56 et deux entretoises extremes 58, 60 s'étendant pour l'essentiel transversalement à la direction A. Il est ainsi définie entre les flasques 52, 54 une chambre centrale 62.

Une paire de lumières 64, 66 est ménagée dans chaque flasque latéral 52, 54. Les lumières 64, 66 débouchent sur le bord libre inférieur 68, des flasques. Elles se terminent, vers l'intérieur des flasques par des portées hémicylindriques 70, 72.

Ces portées 70, 72 reçoivent libres de rotation des arbres 74, 76 portant chacun une paire de roues 78, 80 d'une part, 82, 84, d'autre part.

Les roues 78 à 84 sont placées sur l'extérieur des flasques latéraux. L'axe des roues 78, 80 et de l'arbre 74 est référencé 86. L'axe des roues 82, 84 et de l'arbre 76 est référencé 88. Les axes 86, 88, parallèles entre eux sont orthogonaux à la direction A de translation du chariot 50.

De préférence, le rayon des portées hémicylindriques 70, 72 est sensiblement complémentaire du rayon des arbres 74, 76 pour guider ceux-ci étroitement à rotation. Par contre, la largeur des lumières 64, 66 est légèrement inférieure au diamètre des arbres 74, 76 pour autoriser l'insertion des arbres 74, 76 par les lumières 64, 66 contre les portées hémicylindriques 70, 72, par déformation élastique de la matière, tout en interdisant un libre retrait des arbres 74, 76 supportant les roues porteuses du chariot.

Les roues 78 à 84 font saillie par rapport au bord libre inférieur 68 des flasques latéraux et reposent contre la surface 202 d'un support 200.

Par ailleurs, les flasques latéraux 52, 54 sont pourvus d'une autre lumière qui présente les mêmes dispositions constructives que les lumières 64, 66 mais débouchent sur la surface supérieure 90 des flasques. Cette seconde paire de lumières reçoit à rotation une paire de tourillons coaxiaux 92, 94 prévus de part et d'autre d'un galet 96. L'axe du galet 96 et des tourillons associés est référencé 98. Il s'étend parallèlement aux axes 86 et 88 précités.

Le galet 96 fait largement saillie sur la surface supérieure du chariot 50.

De préférence, le chariot 50 est guidé dans la direction A par un rail 204 en saillie sur la surface supérieure 202 du support 200 et présentant une largeur 1 sensiblement égale à la largeur du chariot 50, soit l'écartement défini entre les surfaces internes en regard des paires de roues 78, 80 et 82, 84.

Les volets 100 sont répartis selon un pas constant le long du trajet A du chariot 50.

Selon le mode de réalisation illustré sur les figures annexées, les volets 100 sont montés à pivotement sur une console 206 solidaire du support 200 autour d'un axe 102 parallèle à la direction A.

Pour l'essentiel, chaque volet 100 comprend un secteur de cylindre 104 centré sur l'axe 102, une paire de tourillons 106, 108 coaxiaux à l'axe 102, et un voile 110 sensiblement radial par rapport à l'axe 102 et reliant les tourillons 106, 108 au secteur cylindrique 104.

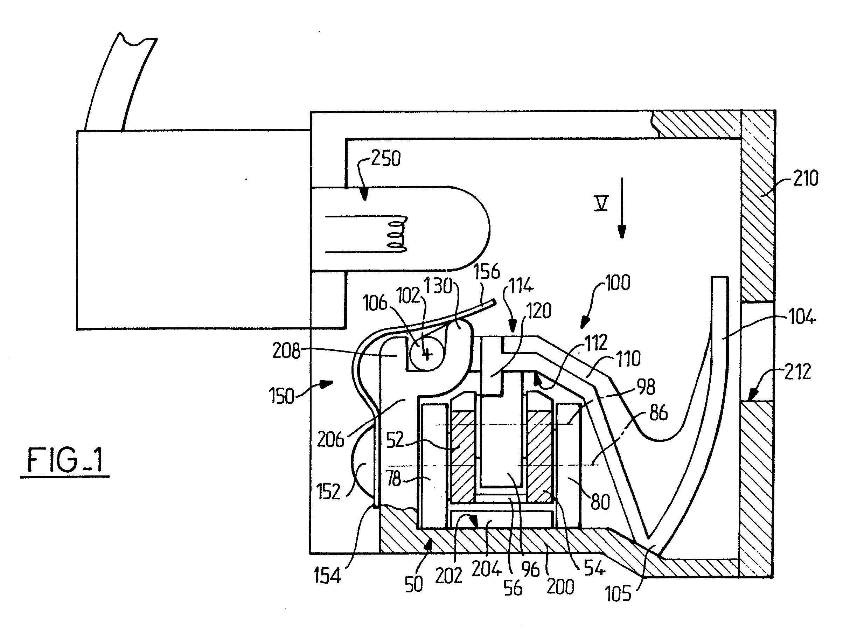

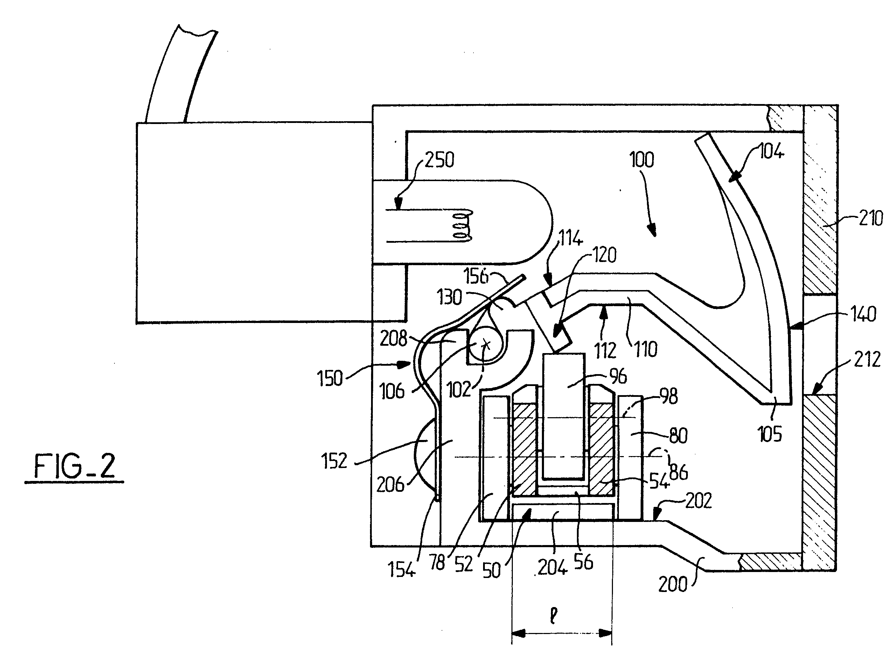

Le voile 110 est superposé au trajet de déplacement du chariot 50, comme illustré sur les figures 1 et 2 annexées.

Chaque voile 110 est pourvu sur sa surface inférieure 112 dirigée vers le chariot 50 d'une came 120. L'écart radial séparant la came 120 de l'axe de pivotement 102 est tel que la came 120 coïncide avec le trajet du galet 96.

Lorsque le galet 96 porté par le chariot 50 n'est-pas sous-jacent à une came 120, l'extrémité inférieure 105 du secteur 104 repose contre le support 200. On obtient alors une position de repos telle qu'illustrée sur la figure 1.

Cette position de repos peut être obtenue par simple gravité dans la mesure où chaque volet 100 s'étend d'un côté de l'axe 102.

Cependant, de préférence, la position de repos des volets 100 peut être sollicitée par un organe élastique 150.

Selon le mode de réalisation illustré sur les figures annexées, l'organe élastique 150 est formé d'une structure en forme de peigne dont l'embase 154 est fixée par sertissage, rivetage ou équivalent en 152, sur la console 206. Les différentes dents 156 du peigne élastique 150 reposent contre des tétons de rappel 130 ménagés sur la surface supérieure 114 du voile 110, en position excentrée par rapport à l'axe 102.

Par contre, lorsque au cours du déplacement du chariot 50 le galet 96 atteint l'une des cames 120, il soulève progressivement celles-ci et pivote par conséquent le volet 100 associé autour de l'axe 102 dans une position de travail telle qu'illustrée sur la figure 2. Selon l'illustration des figures 1 et 2, le déplacement du volets 100 de la position de repos vers la position de travail correspond à un pivotement dans le sens contraire des aiguilles d'une montre.

Lorsque le galet 96 a dépassé la came 120, le volet 100 associé est reporté en position de repos telle qu'illustrée sur la figure 1 par l'organe élastique 150.

On notera que le ressort 150 sert par ailleurs à maintenir les tourillons 106, 108 portés par chaque volet 100 dans la fourche support 208 solidaire de la console 206.

Pour faciliter l'engagement du galet 96 sous la came 120, de préférence, les surfaces latérales 122, 124 de la came 120, qui s'étendent pour l'essentiel transversalement à la direction A du déplacement du chariot 50, sont inclinées par rapport à cette direction A.

Plus précisément, elles convergent symétriquement vers le bas.

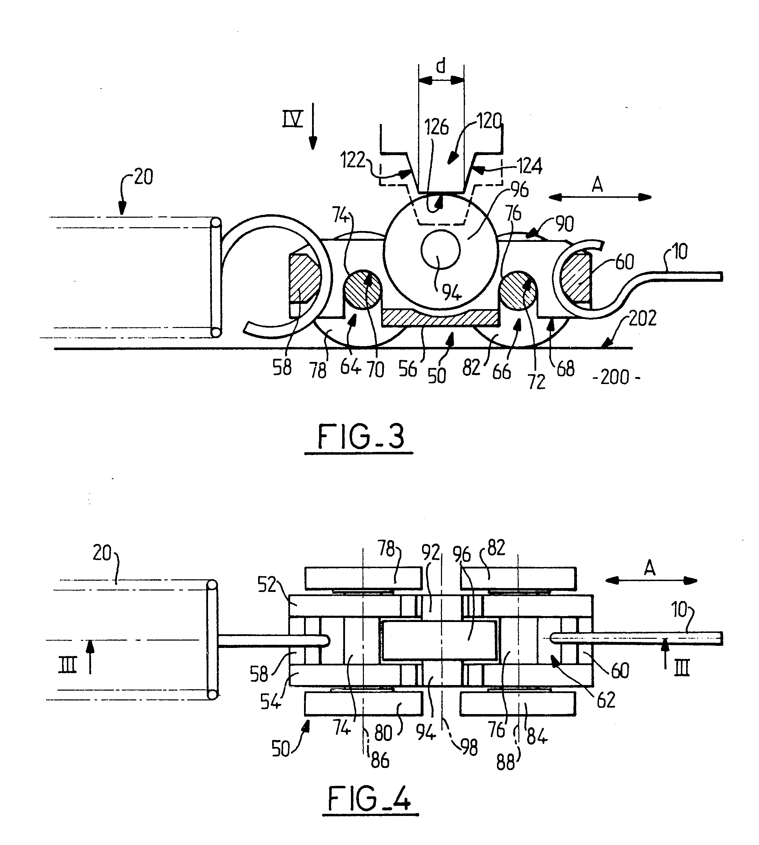

On notera que sur la figure 3 on a représenté en traits continus une came 120 en position de travail, soulevée par le galet 96 sous-jacent. Sur la même figure 3, on a représenté en traits interrompus la position de la came 120 en position de repos.

De préférence, le chariot 150 est sollicité vers une position de repos par un ressort 20, tel qu'un ressort hélicoïdal travaillant à la traction. Ce ressort 20 peut être accroché sur l'entretoise 58 du chariot 50.

Le câble de commande 10 travaillant à la traction dans un sens opposé au ressort 20 est alors accroché sur l'autre entretoise 60.

Les différents volets 100 sont placés en regard d'une paroi 210 solidaire du support 200. Cette paroi 210 est pourvue d'une pluralité de fenêtres 212 alignées, disposées respectivement en regard de l'un des volets 100, et plus précisément du secteur cylindrique 104 porté par ceux-ci.

L'homme de l'art comprendra aisément à la lecture de la description qui précède que lors du déplacement du chariot 50 dans la direction A, grâce à la coopération définie entre le galet 96 et les cames 120, les volets 100 sont déplacés alternativement en regard des fenêtres 212.

En d'autres termes lorsqu'un volet 100 est en position de repos, tel qu'illustré sur la figure 1, la zone supérieure du secteur 104 correspondant est placé en regard de la fenêtre associée 212. Par contre, lorqu'un volet 100 est déplacé en position de travail par le chariot 50 sous-jacent, comme illustré sur la figure 2, la zone inférieure du secteur 104 est portée en regard de la fenêtre associée 212.

L'affichage ainsi réalisé à travers la fenêtre 212 peut être obtenu selon diverses positions.

Selon la représentation donnée sur les figures annexées, la fenêtre 212 peut être formée d'un matériau transparent d'une première couleur prédéterminée. Le secteur 104 du volet 100 est réalisé en un matériau transparent et pourvu sur l'une de ses zones supérieure ou inférieure, placées alternativement en regard de la fenêtre 212, d'un revêtement transparent d'une seconde couleur prédéterminée formant filtre. Ainsi, lorsque le volet 100 est déplacé de la position de repos à la position de travail, la fenêtre 212 observée de l'extérieur change d'aspect.

Selon l'illustration annexée le revêtement de la seconde couleur prédéterminée formant filtre, référencé 140, est placé sur la zone inférieure des secteurs 104.

De préférence une source lumineuse 250 est placée en arrière de la paroi 210 et des secteurs 104, pour permettre un affichage optimum de nuit.

De préférence des symboles permettant d'identifier la vitesse engagée de la boîte sont placés par exemple par gravure, soit sur le matériau transparent de la première couleur formant la fenêtre 212, soit sur la zone inférieure du secteur 104 placé en regard de ladite fenêtre, en position de travail.

En variante, la fenêtre 212 peut être libre, c'est-à-dire dépourvue d'un matériau présentant une première couleur prédéterminée, la zone inférieure du secteur 104 étant pourvue d'un repère (couleur ou symbole graphique ) destiné à être placé en regard de la fenêtre 212 lorsque le volet 100 est déplacé en position de travail.

Comme cela est connu de l'homme de l'art, la structure des boîtes de vitesses automatiques jusqu'ici proposée impose un déplacement du câble de commande 10 selon un pas irrégulier, lors de l'engagement successif des différentes vitesses.

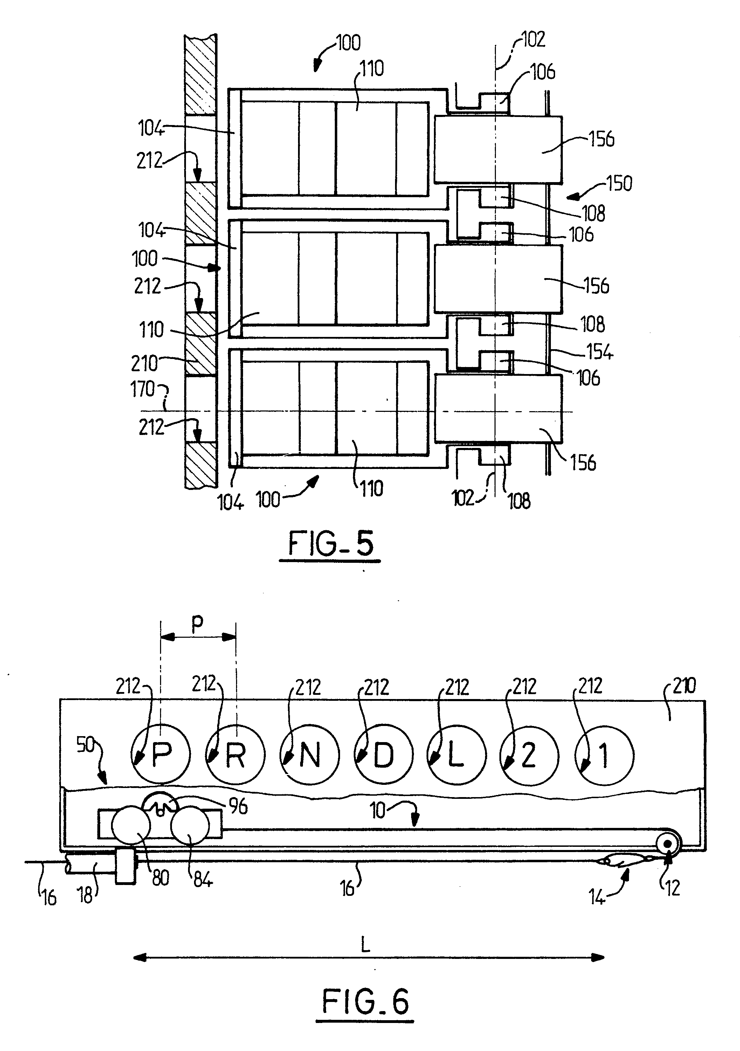

Par contre, comme cela a été indiqué précédemment, les constructeurs automobiles souhaitent, notamment pour ces raisons d'esthétique, visualiser l'engagement des différentes vitesses selon un pas régulier. On aperçoit par exemple sur la figure 6 la paroi avant 210 d'un boîtier d'affichage conforme à la présente invention pourvue de 7 fenêtres 212 alignées selon une rangée et équiréparties selon un pas p constant.

De même, les volets 100 placés respectivement en regard des fenêtres 212 sont réparties selon un pas régulier le long du trajet A de déplacement du chariot 50.

Pour assurer une inter-action correcte entre le chariot 50 déplacé selon un pas irrégulier par la boîte de vitesses, et les volets d'affichage 100 répartis selon un pas régulier sur le trajet A de déplacement du chariot, selon une caractéristique fondamentale de la présente invention, les cames 120 sont positionnées de façon variable et contrôlée. sur les volets 100, parallèlement à l'axe de pivotement 102 et à la direction de déplacement A, pour définir une loi telle que, quelle que soit l'amplitude du déplacement du chariot 50 entre deux positions stables de la boîte de vitesses, lorsqu'une vitesse est engagée, le volet 100 associé soit déplacé en position de travail en regard de la fenêtre 212 correspondante.

En d'autres termes, au lieu d'être symétriques par rapport au plan de symétrie général 170 des volets 100, les cames 120 peuvent être décalées d'un côté ou de l'autre de ce plan de symétrie 170, parallèlement à l'axe 102 et à la direction A, pour tenir compte de la loi non linéaire de déplacement du chariot 50. On notera que le plan de symétrie 170 précité s'étend orthogonalement à l'axe de pivotement 102 et à la direction de déplacement A.

En l'état actuel, la Demanderesse considère que la disposition la plus avantageuse serait de prévoir un écartement entre deux cames 120 portées par des volets 100 adjacents destinés à visualiser l'engagement de vitesses respectives spécifiques, égal à l'amplitude du déplacement du chariot 50 lors du passage de l'une desdites vitesses spécifiques à l'autre dite vitesse spécifique.

On notera cependant que par ailleurs la longueur d de la base 126 des cames 120 reliant les deux surfaces latérales 122, 124 peut être variable d'une cause 120 à l'autre. La longueur d de la base 126 détermine l'amplitude de déplacement du chariot 50 pendant laquelle le volet 100 associé est déplacé en position de travail par le galet 96 sous-jacent. La longueur d de la base 126 peut donc être adaptée pour tenir compte des tolérances de positionnement du câble de commande 10.

On a illustré schématiquement sur la figure 6 annexée la paroi avant 210 d'un dispositif d'affichage comprenant 7 fenêtres 212 équi-réparties et pourvues respectivement des symboles "P","R", "N". "D", "L", "2", "1". On aperçoit par ailleurs schématiquement sur la figure 6 le chariot 50 tracté à l'encontre de la sollicitation du ressort 20 par le câble de commande 10. Celui-ci s'étend parallèlement au support 200. Le chariot 50 est représenté sur la figure 6 dans la position de repos dûe à la sollicitation du ressort 20. Le chariot 50 est placé à une première extrémité de son trajet de déplacement A. Une poulie de renvoi recevant le câble de commande 10 est placée à la seconde extrémité du trajet A du chariot 50. Le câble de commande 10 est pourvu d'un mousqueton 14 en aval de la poulie de renvoi 12. Le mousqueton 14 est accroché sur un câble auxiliaire 16. Le câble auxiliaire 16 est relié à l'organe actif de la boîte de vitesses automatique. Le câble auxiliaire 16 est engagé dans une gaine 18. Celle-ci est portée par le support 200 au voisinage de la première extrémité du trajet de déplacement du chariot 50 comme illustré sur la figure 6.

On notera que pour permettre un fonctionnement correct du dispositif ainsi représenté, la longueur L du câble auxiliaire 16,émergeant de la gaine 18 lorsque le chariot 50 est placé dans sa position de repos sollicité par le ressort 20,égale la course complète de déplacement du chariot 50.

En d'autres termes, lorsque le chariot 50 est déplacé à la seconde extrémité de son trajet A le mousqueton 14 est placé en position adjacente à l'extrémité de la gaine 18.

La disposition illustrée sur la figure 6 permet, en cas de détérioration du câble auxiliaire 16 ou du dispositif d'affichage de séparer ces deux éléments en vue d'une réparation ou d'un changement, sans avoir à démonter ou à changer l'ensemble.

Bien entendu la présente invention n'est pas limitée au mode de réalisation qui vient d'être décrit mais s'étend à toutes variantes conformes à son esprit.

Ainsi par exemple selon le mode de réalisation précédemment décrit, les volets 100 sont portés à pivotement autour de l'axe 102 le long du trajet A de déplacement du chariot 50. Selon une variante conforme à la présente invention, les volets 100 pourraient cependant être portés libres de translation transversalement à la direction A de déplacement du chariot 50, entre une position de repos et une position de travail, en regard des fenêtres 212.

Par ailleurs, selon le mode de réalisation précédemment décrit le câble coopérant avec le chariot 50 travaille à la traction à l'encontre du ressort 20.

Le cas échéant le câble de commande 10 pourrait travailler par poussée sur le chariot 50 à l'encontre d'un ressort 20 travaillant à la compression. Dans ce cas, il n'est plus nécessaire que le câble de commande 10 soit accroché sur le chariot 50. Il peut venir simplement en butée contre l'une des extrémités axiales de celui-ci. Cette disposition peut s'avérer avantageuse pour simplifier l'assemblage et le démontage éventuel du dispositif d'affichage.

## Revendications

1. Dispositif d'affichage caractérisé par le fait qu'il comprend :
- un organe de commande (10),
- un chariot (50) déplacé selon un trajet prédéterminé (A) par l'organe de commande (10), et
- une pluralité de volets (100) répartis selon un pas constant (p) le long du trajet (A) du chariot, chaque volet (100) étant équipé d'une came (120) apte à venir en prise avec le chariot (50) pour déplacer le volet (100) associé d'une position de repos vers une position de travail, les cames (120) étant positionnées de façon variable et contrôlée sur les volets (100) pour définir une loi prédéterminée entre le déplacement du chariot (50) et les instants successifs de déplacement des volets (100).

2. Dispositif d'affichage selon la revendication 1, caractérisé par le fait que l'organe de commande (10) est formé d'un câble.

3. Dispositif d'affichage selon l'une des revendications 1 ou 2, caractérisé par le fait que l'organe de commande (10) est formé d'un câble actionné par une boîte de vitesses automatique.

4. Dispositif d'affichage selon l'une des revendications 1 à 3, caractérisé par le fait qu'il comprend un ressort (20) qui sollicite le chariot (50) vers une position de repos à l'encontre de l'effort exercé par l'organe de commande (10).

5. Dispositif d'affichage selon l'une des revendications 1 à 4, caractérisé par le fait que le chariot (50) coopère successivement avec les cames (120) par l'intermédiaire d'un galet (96).

6. Dispositif d'affichage selon l'une des revendications 1 à 5, caractérisé par le fait que le chariot (50) est guidé à translation.

7. Dispositif d'affichage selon l'une des revendications 1 à 6, caractérisé par le fait que le chariot (50) est pourvu d'une pluralité de roulettes (78, 80, 82, 84).

8. Dispositif d'affichage selon l'une des revendications 1 à 7, caractérisé par le fait que les volets (100) sont sollicités élastiquement vers une position de repos.

9. Dispositif d'affichage selon l'une des revendications 1 à 8, caractérisé par le fait que les volets (100) sont déplacés à pivotement entre une position de repos et une position de travail.

10. Dispositif d'affichage selon l'une des revendications 1 à 8, caractérisé par le fait que les volets (100) sont déplacés à translation entre une position de repos et une position de travail.

11. Dispositif d'affichage selon l'une des revendications 1 à 10, caractérisé par le fait qu'un ressort (20) sollicite le chariot (50) vers une position de repos à l'encontre de l'effort exercé par l'organe de commande (10) et par le fait que l'organe de commande (10) est formé d'un câble relié par l'intermédiaire d'un mousqueton (14) à un câble auxiliaire actif (16) lui-même engagé dans une gaine (18), la longueur du câble (16) émergeant de la gaine (18), lorsque le chariot (50) est placé en position de repos étant égale à la course complète de déplacement du chariot (50).

FIG_1

02914414

FIG_2

0291414

0291414

FIG_3

FIG_4

0291414

FIG_5

FIG.6

Office européen
des brevets

**RAPPORT DE RECHERCHE EUROPEENNE**

Numero de la demande

EP 88 40 1164

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 739 741 (FREYERMUTH) <br> * Figure 1 * <br> --- | 1,2 | B 60 R 16/02 |
| A | US-A-2 293 698 (CHAPUT) <br> * Figure 2 * <br> --- | 1 | |
| A | US-A-2 814 893 (AIKEN) <br> * Figures 3,4 * <br> --- | 1 | |
| A | FR-A-2 229 332 (TESTUT AEQUITAS) <br> * Figures 2A,2B * <br> ----- | 1 | |

**DOMAINES TECHNIQUES RECHERCHES (Int. Cl.4)**

B 60 R
G 09 F
G 05 G

Le présent rapport a été établi pour toutes les revendications

| Lieu de la recherche | Date d'achèvement de la recherche | Examinateur |
|---|---|---|
| LA HAYE | 22-08-1988 | ONILLON C.G.A. |